# EUROPEAN PATENT APPLICATION

(11) **EP 4 706 944 A1**
(43) Date of publication of application: **11.03.2026**
(21) Application number: 24818795.7
(22) Date of filing: 07.06.2024
(51) Int. Cl.: B29C 64/282, B29C 64/393, B33Y 30/00, B33Y 50/02

(54) **LIGHT UNIFORMITY ADJUSTMENT METHOD AND APPARATUS, DEVICE, AND STORAGE MEDIUM**

(30) Priority: 09.06.2023 CN 202310679151
(71) Applicant: Shining 3D Tech Co., Ltd., Hangzhou, Zhejiang 311258 (CN)
(72) Inventor: ZHANG, Yuanhao, Hangzhou, Zhejiang 311258 (CN); ZHAO, Xiaobo, Hangzhou, Zhejiang 311258 (CN); QIU, Kaijia, Hangzhou, Zhejiang 311258 (CN); CHEN, Da, Hangzhou, Zhejiang 311258 (CN)
(74) Representative: Dai, Simin
(86) International application number: PCT/CN2024/098196
(87) International publication number: WO 2024/251269

(57) **Abstract**

The present invention relates to a light uniformity adjustment method and apparatus, a device, and a storage medium. The light uniformity adjustment method comprises: obtaining a first captured image, wherein the first captured image is obtained by an acquisition device photographing a first display image displayed on a printing screen; calculating a weighted variance value of the first captured image to obtain a first numerical value, and determining an initial current according to the first numerical value; obtaining a second captured image, wherein the second captured image is obtained by the acquisition device photographing, under the initial current, a second display image displayed on the printing screen; and calculating a weighted variance value of the second captured image to obtain a second numerical value, and determining initial light intensity of the printing screen according to the second numerical value. According to the method provided by the present application, uniformity calibration can be performed on the light intensity of a full-frame, thereby ensuring the details and precision of a fine model.

## Description

The present application claims priority to Chinese patent application No. 202310679151.3, filed with the China National Intellectual Property Administration on June 9, 2023, entitled "Light Uniformity Adjustment Method and Apparatus, Device and Storage Medium", which is hereby incorporated by reference in its entirety.

### TECHNICAL FIELD

The present disclosure relates to the field of 3D (three-dimensional) printing technologies, and in particular, to a light uniformity adjustment method and apparatus, a device, and a storage medium.

### BACKGROUND

Currently, liquid crystal display (LCD) photocuring printers mostly use matrix ultraviolet light sources. In order to improve uniformity of initial light intensity on a LCD printing screen, manners of extending an optical length, modifying lamp bead layout or lens structure, and combining COB (Chip on Board) light source and Fresnel lens are usually adopted on the structure. However, as actual luminous power of each lamp bead will be different, and considering limitations of aging, manufacturing error and installation accuracy of optical devices, after ultraviolet light passes through the LCD printing screen, light intensity values of different regions of an entire frame will be inconsistent, resulting in uneven exposure of photosensitive resin, and details and accuracy of a fine model cannot be guaranteed. Therefore, it is necessary to perform further uniformity calibration on light intensity over the entire frame.

### SUMMARY

### (1) Technical Problems to be Solved

The technical problem to be solved by the present disclosure is the problem of uneven light intensity of existing printers.

### (2) Technical Solution

In order to solve the above technical problem, an embodiment of the present disclosure provides a light uniformity adjustment method, including:
acquiring a first captured image, where the first captured image is obtained by capturing, by a capturing apparatus, a first display image displayed on a printing screen;
calculating a weighted variance value of the first captured image to obtain a first value, and determining an initial current according to the first value;
acquiring a second captured image, where the second captured image is obtained by capturing, by the capturing apparatus, a second display image displayed on the printing screen under the initial current; and
calculating a weighted variance value of the second captured image to obtain a second value, and determining initial light intensity of the printing screen according to the second value.

In a second aspect, a light uniformity adjustment apparatus is further provided, including:
a first acquiring unit, configured to acquire a first captured image, where the first captured image is obtained by capturing, by a capturing apparatus, a first display image displayed on a printing screen;
a first calculating unit, configured to calculate a weighted variance value of the first captured image to obtain a first value, and determine an initial current according to the first value;
a second acquiring unit, configured to acquire a second captured image, where the second captured image is obtained by capturing, by the capturing apparatus, a second display image displayed on the printing screen under the initial current; and
a second calculating unit, configured to calculate a weighted variance value of the second captured image to obtain a second value, and determine initial light intensity of the printing screen according to the second value.

In a third aspect, an electronic device is provided, including:
a memory;
one or more processors; and
a computer program;
where the computer program is stored in the memory and configured to be executed by the one or more processors to implement the above light uniformity adjustment method.

In a fourth aspect, a computer-readable storage medium is further provided, storing a computer program, where the computer program is executed by one or more processors to implement the light uniformity adjustment method according to the foregoing embodiments.

### (3) Beneficial Effects

Compared with prior arts, the above technical solutions provided by the embodiments of the present disclosure have following advantages.

Embodiments of the present disclosure provide a light uniformity adjustment method, including: acquiring a first captured image, where the first captured image is obtained by capturing, by a capturing apparatus, a first display image displayed on a printing screen; calculating a weighted variance value of the first captured image to obtain a first value, and determining an initial current according to the first value; acquiring a second captured image, where the second captured image is obtained by capturing, by the capturing apparatus, a second display image displayed on the printing screen under the initial current; and calculating a weighted variance value of the second captured image to obtain a second value, and determining initial light intensity of the printing screen according to the second value. According to the method provided by the present disclosure, the initial current of the printer is determined by calculating the weighted variance value of the captured image, so as to accelerate the speed of light uniformity adjustment, and then under the initial current, the pixel grayscale weighted variance value of the second captured image of the entire frame is used as a convergence condition, and under the condition of convergence, the current of the printing screen is adjusted based on the light intensity when the printing screen displays the second display image, so as to determine the initial light intensity, which can perform uniformity calibration on the light intensity of the entire frame, thereby ensuring the details and accuracy of the fine model.

It shall be understood that both the above general description and the following detailed description are examples and explanatory only and do not limit the present disclosure.

### BRIEF DESCRIPTION OF DRAWINGS

The accompanying drawings, which are incorporated in and constitute a part of this specification, illustrate embodiments consistent with the present disclosure and, together with the description, serve to explain the principles of the present disclosure.

In order to more clearly illustrate the technical solutions in the embodiments of the present disclosure or in the prior arts, the drawings used in the description of the embodiments or the prior arts will be briefly described below, and it is obvious to those of ordinary skill in the art that other drawings can be obtained according to these drawings without making creative efforts.
FIG. 1 is a schematic flowchart of a light uniformity adjustment method according to an embodiment of the present disclosure.
FIG. 2 is a schematic structural diagram of a 3D printer according to an embodiment of the present disclosure.
FIG. 3 is a schematic diagram of a calibration point image according to an embodiment of the present disclosure.
FIG. 4 is a schematic diagram of mask generation according to an embodiment of the present disclosure.
FIG. 5 is a detailed flowchart of S140 in the light uniformity adjustment method shown in FIG. 1.
FIG. 6 is a schematic diagram of a light uniform process according to an embodiment of the present disclosure.
FIG. 7 is a grayscale level diagram before and after light uniform according to an embodiment of the present disclosure.
FIG. 8 is a schematic flowchart of another light uniformity adjustment method according to an embodiment of the present disclosure.
FIG. 9 is a schematic structural diagram of a light uniformity adjustment apparatus according to an embodiment of the present disclosure.
FIG. 10 is a schematic structural diagram of an electronic device according to an embodiment of the present disclosure.

### DETAILED DESCRIPTION

In order to make the objectives, technical solutions and advantages of the embodiments of the present disclosure clearer, the technical solutions in the embodiments of the present disclosure will be clearly and completely described below. Apparently, the described embodiments are part of the embodiments of the present disclosure, instead of all embodiments. All other embodiments obtained by a person of ordinary skill in the art based on the embodiments of the present disclosure without making creative efforts shall fall within the protection scope of the present disclosure.

Currently, a commonly used light source calibration technology is to divide an entire frame of a printing area into several measurement points, and perform point-by-point measurement by using an optical power meter to obtain light intensity distribution data of each point. After the minimum value is found, the grayscale of each point is adjusted to obtain a grayscale mask image of the entire image, and finally the grayscale calibration of the entire exposure area is realized. However, in this solution, regional light intensities of corresponding segmentation areas are replaced with regional light intensities of discrete points, the accuracy of light uniformity calibration between points is poor, and the accuracy can be improved only when there are enough segmentation points, but the detection time and difficulty will also be increased accordingly.

The conventional exposure image used by the commonly used LCD printing area exposure technology is a black and white image of 256 grayscale, white (grayscale being 255) represents a 100% bright area, black (grayscale being 0) represents complete dark, and the light radiation intensity of the exposed region is positively correlated with the grayscale of a slice pattern of the area. A black-and-white camera is used to capture a grayscale distribution diagram of a light source to be detected on an LCD printing screen, a light intensity grayscale mask image of the light source is calculated according to grayscale information of an acquired image, the grayscale mask image is superimposed with a model slice pattern, and after ultraviolet light passes through the LCD printing screen, a requirement for consistency of light intensity on the screen can be achieved. This technology can adapt to light sources of various structures without considering the installation error of ultraviolet lamp beads. Currently, the technology mainly has two implementations.
(1) Region segmentation manner: first, flat-field correction is performed on the camera module by using a reference light source. Then, the camera obtains an original grayscale distribution map of the exposure region, divides the distribution map into a plurality of regions, and extracts an average grayscale value of each discrete region to perform corresponding grayscale compensation. A reference grayscale value is selected from the fitted grayscale values of all the segmented regions, and grayscale compensation coefficients of other regions are calculated accordingly, so as to obtain a mask image corresponding to the exposure region. In this solution, the grayscale of the discrete region is represented by an average value, and its boundary is fitted by interpolation. Although the calculation speed is fast, for a region where the light intensity distribution is extremely complex (the spatial frequency of the image changes rapidly), the average value cannot perfectly represent the light intensity of the region, that is, the light intensities of different regions are not completely consistent, and the flexibility is poor. In addition, the boundary of the region may form an obvious boundary on the mask image, which is inconsistent with the real light intensity distribution state. For some fine models, the problem of local detail blurring may occur.
(2) Full pixel calibration: all pixel-level grayscale distribution maps of an exposure area are obtained, then a minimum grayscale value is used as a reference, mask grayscale values corresponding to other pixels are sequentially calculated, and finally mask light uniformity calibration of an entire frame is implemented through image scaling. In this solution, the spatial position of the camera is not calibrated, and at present, the position calibration is performed only by image scaling, so that the accuracy cannot be ensured, and the influence caused by camera aging, distortion, and mounting deviation is not considered, so that the acquired grayscale image deviates from the real image, and it is difficult to accurately make the mask and the light intensity distribution state one-to-one correspond, and the light uniformity effect is limited. In addition, this manner is easily affected by screen dead pixels, ambient light, and noise, and it is difficult to achieve an optimal light uniformity state.

In summary, in the prior art, the spatial positions of the camera and the exposure surface are not mapped one by one, and the interference of the camera mounting angle, the camera aging distortion, the external ambient light and other factors are not comprehensively considered, so that the original image acquired by the camera is deviated from the real light intensity distribution state; secondly, in the prior art, the grayscale image acquired by the camera is segmented, and the average grayscale value of each discrete region is extracted to generate the grayscale mask image, and then the requirement on the uniformity of the light intensity is met by means of interpolation, but this solution is lossy to the original image, and a better effect can be achieved only when there are enough segmented regions.

In view of the above technical problems, an embodiment of the present disclosure provides a light uniformity adjustment method, which eliminates interference of external factors such as aging of a photosensitive CCD of a camera, distortion and contamination of a lens, and external ambient light through calibration of a camera position and photosensitivity, establishes a spatial positional relationship between the camera and an exposure surface of a printing screen, can accurately obtain a light intensity grayscale distribution map of a light source, and then automatically and iteratively obtains an optimal mask image by analyzing a pixel grayscale weighted variance value of an image acquired by an entire frame. The embodiments of the present disclosure can adapt to various light source structures and environmental conditions, can realize miniaturization and portability, effectively reduce the installation and debug time of workers, and realize rapid uniformity of the printing light intensity on the screen. Details are described in the following one or more embodiments.

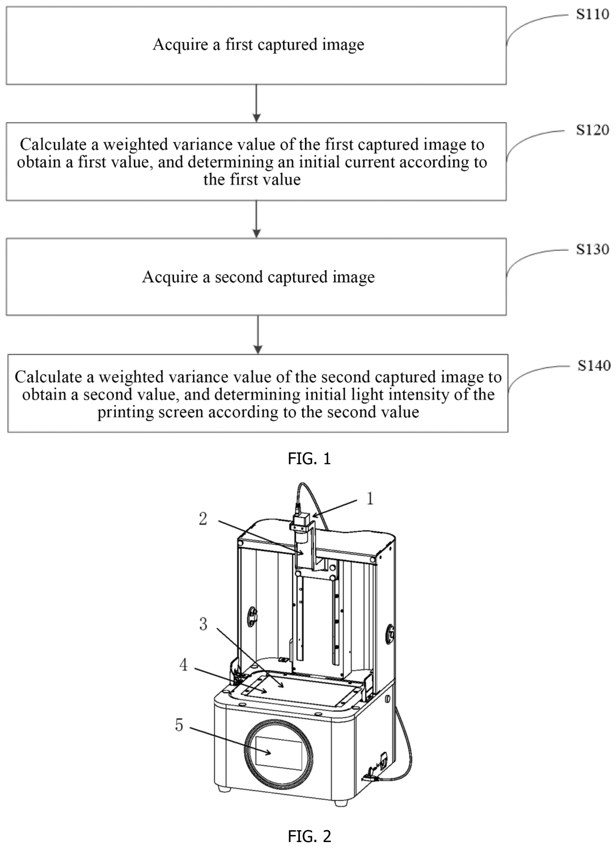

FIG. 1 is a schematic flowchart of a light uniformity adjustment method provided by an embodiment of the present disclosure, which is applied to a 3D printer and specifically includes following steps S110 to S140 as shown in FIG. 1.

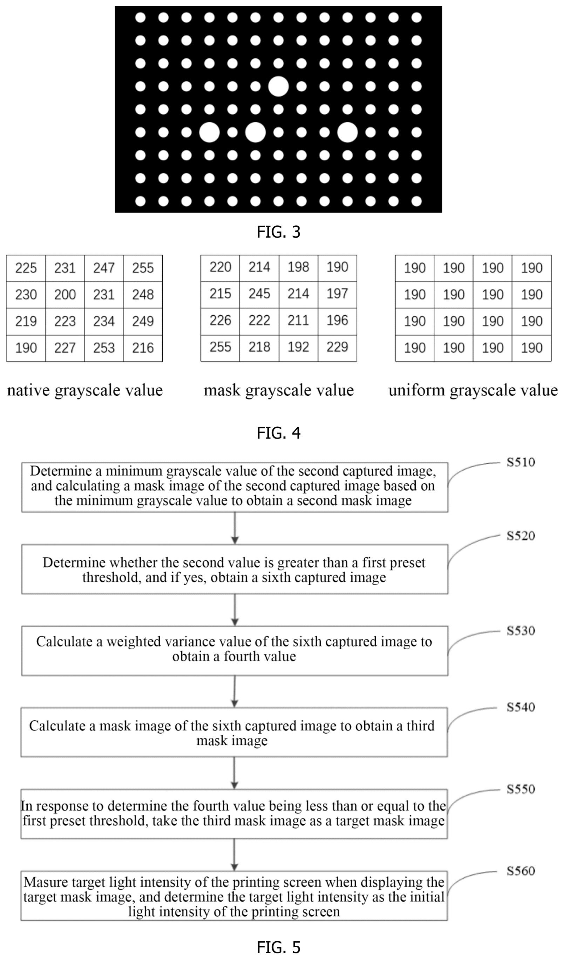

For example, referring to FIG. 2, FIG. 2 is a schematic structural diagram of a 3D printer provided by an embodiment of the present disclosure, the printer includes a black-and-white camera 1, a cantilever bracket 2, a light homogenizing film 3, an LCD printing screen 4 and an LCD printer display screen 5, the black-and-white camera 1 is mounted on the printer by means of the cantilever bracket 2, the light homogenizing film 3 is placed above the LCD printing screen 4, an axis of a lens of the black-and-white camera 1 is perpendicular to a plane of the light homogenizing film 3, the LCD printing screen 4 refreshes a calibration point map as shown in FIG. 3, a focusing ring of the black-and-white camera 1 is rotated, edge definition of the calibration point map is observed in real time from the LCD printer display screen 5, and when an edge is sharp, focusing is completed, and a subsequent embodiment performs a light uniformity adjustment process of the LCD printing screen 4 when the black-and-white camera 1 completes focusing.

S110, acquiring a first captured image.

The first captured image is obtained by the capturing apparatus by capturing the first display image displayed on the printing screen.

Optionally, before obtaining the first captured image, the method further includes:
acquiring a third captured image, where the third captured image is obtained by the capturing apparatus by capturing a calibration point map displayed on the printing screen; calculating a camera parameter of the capturing apparatus based on the third captured image; acquiring a fourth captured image, where the fourth captured image is obtained by the capturing apparatus by capturing a standard light source; cropping the fourth captured image based on the camera parameter, to obtain a first cropped image of a target size, where the target size is a size of the printing screen; and calculating a mask image of the first cropped image, to obtain a first mask image, where the first mask image is used to compensate for the first captured image.

Optionally, after calculating a camera parameter of the capturing apparatus according to the third captured image, the method further includes:
determining whether the relative spatial position between the capturing apparatus and the printing screen is properly calibrated according to a calibration residual value and a preset residual value, where the calibration residual value is calculated according to the third captured image; if the residual calibration value is less than the preset residual value, generating a determination result that the position is properly calibrated; or, if the residual calibration value is greater than or equal to the preset residual value, generating a determination result that the position is not properly calibrated.

It can be understood that the capturing apparatus refers to the black-and-white camera 1 in the printer shown in FIG. 2, and the printing screen refers to the LCD printing screen 4 in the printer shown in FIG. 2. After the focusing of the capturing apparatus is completed, the camera position of the capturing apparatus is calibrated, specifically, the calibration point map is refreshed on the printing screen, the capturing apparatus captures the calibration point map displayed on the printing screen to obtain a third captured image, and transmits the third captured image to the data processing module in the printer, where the data processing module is configured to perform a series of processing such as compensation, cropping, and calculation on the captured image, specifically, an internal and external parameter matrix of the camera and a calibration residual value are calculated according to the third captured image, the internal and external parameter matrix of the camera is recorded as a camera parameter, and whether a relative spatial position (camera parameter) between the capturing apparatus and the printing screen is properly calibrated is determined according to a size of the calibration residual value and a preset residual value; if the residual calibration value is less than the preset residual value, it indicates that the position is properly calibrated, and if the residual calibration value is greater than or equal to the preset residual value, it indicates that the position is not properly calibrated, and it is necessary to check the camera tooling and adjust the camera position or component.

For example, referring to FIG. 3, FIG. 3 is a schematic diagram of a calibration point map provided by an embodiment of the present disclosure, the calibration point map is obtained by using a black background and a plurality of uniformly distributed white dots for calibrating a camera position, and the calibration point map may be selected according to a user requirement.

Optionally, obtaining a fourth captured image may be specifically implemented by using the following steps:
acquiring the fourth captured image in response to the determination result that the position is properly calibrated.

It can be understood that after it is determined that the position is properly calibrated, the camera light sensitivity is calibrated, specifically, the standard light source is placed on the light homogenizing film 3 of the printer as shown in FIG. 2, the screen light intensity uniformity of the standard light source is greater than 90%, and the standard light source may be a mobile terminal, such as a tablet, so that a pure white image is displayed on the screen of the mobile terminal. The capturing apparatus captures the standard light source to obtain a fourth captured image, and transmits the fourth captured image to the data processing module of the LCD printer for processing, specifically, the fourth captured image is cropped based on the determined qualified camera parameters to obtain a first cropped image of a target size, where the target size is the size of the printing screen, that is, the size of the cropped fourth captured image is consistent with the printing screen, it can be understood that the captured fourth captured image may have a black edge, so the fourth captured image is cropped based on the size of the printing screen to obtain the captured image of the standard light source. Then, a mask image of the first cropped image is calculated to obtain the first mask image, where the first mask image is used to compensate for a captured image captured by a subsequent capturing apparatus, and the first mask image is specifically used to correct a photosensitive difference of a CCD lens of the camera (ultraviolet light is irradiated for a long time, and light sensitivity of a CCD element of the camera is different), an optical path difference from different positions on the printing screen to the photosensitive CCD of the camera (the closer the camera is to the LCD printing screen, the greater an impact degree of the optical path difference), an optical path difference caused by non-perpendicular rotation between an axis of the camera and the printing screen (an optical path difference caused by angle deflection of the camera), and stray light impact caused by external ambient light.

For example, referring to FIG. 4, FIG. 4 is a schematic diagram of mask generation provided by an embodiment of the present disclosure, FIG. 4 includes a native grayscale value, a mask grayscale value, and a uniform grayscale value, on the basis of the above embodiment, where the native grayscale value refers to the grayscale value of the first cropped image, the mask grayscale value refers to the grayscale value of the first mask image, after the minimum grayscale value in the native grayscale value is determined, the mask grayscale value is adjusted pixel by pixel so that the grayscale value of the entire frame of the first cropped image is close to the minimum grayscale value, the grayscale value of the entire frame refers to the native grayscale value, and the uniform grayscale value is the minimum grayscale value, and one manner for calculating the mask grayscale value shown in FIG. 4 is as follows: the native grayscale value is 225, the minimum grayscale value is 190, the mask grayscale value 220=255-(225-190), and the grayscale value range is 0-255, where 0 is the minimum grayscale value, 255 is the maximum grayscale value, and other manners for calculating the mask grayscale value are not repeated.

It can be understood that after the sensitivity calibration of the camera is completed and the first mask image for correcting the influence of the capturing apparatus is calculated, the initial current of the printer needs to be determined, specifically, the standard light source placed on the light homogenizing film 3 is removed, a white image is exposed on the printing screen, and the white image is recorded as the first display image; the capturing apparatus captures the first display image displayed on the printing screen to obtain the first captured image, and transmits the first captured image to the data processing module of the printer for processing.

S120, calculating a weighted variance value of the first captured image to obtain a first value, and determining an initial current according to the first value.

Optionally, calculating a weighted variance value of the first captured image to obtain a first value in S120 may be specifically implemented by using following steps:
compensating the first captured image by using the first mask image to obtain a compensated first captured image; cropping the compensated first captured image based on the camera parameter to obtain a second cropped image of the target size; and calculating a pixel grayscale weighted variance value of the second cropped image to obtain a first value.

It may be understood that, based on S110, the first captured image and the first mask image are superimposed to compensate for impact of the capturing apparatus on the first captured image, to obtain the compensated first captured image. Then, cropping processing is performed on the compensated first captured image, so that a size of the compensated first captured image is consistent with a size of the printing screen, to obtain a second cropped image. A pixel grayscale weighted variance value of the second cropped image is calculated to obtain the first value.

Optionally, determining the initial current based on the first value in S120 may be specifically implemented by using the following steps:
adjusting the present current according to a preset step size to obtain a target current, where the first captured image is obtained under the present current; acquiring a fifth captured image obtained by the capturing apparatus capturing the first display image displayed on the printing screen under the target current; calculating a weighted variance value of the fifth captured image to obtain a third value; and determining a maximum value among the first value and the third value and determining a current corresponding to the maximum value as the initial current if an cumulative count of times of adjusting the current reaches a preset count of times.

It can be understood that after the calculation of the first value is completed, the present current of the printer is automatically adjusted according to the preset step size to obtain the target current, the first captured image is obtained by the capturing apparatus capturing the first display image displayed on the printing screen under the present current, the preset count of times is determined according to the preset step size, the preset count of times may be the count of times the capturing apparatus captures and/or the count of times the current is adjusted, and when the step size is small, the count of times is small, for example, the preset step size is 1, and the preset count of times is 10. In the process of capturing and adjusting, the cumulative count of times is calculated, and if the current cumulative count of times of adjusting is less than the preset count of times, the first display image displayed on the printing screen is captured by the capturing apparatus at the target current to obtain the fifth captured image, and the weighted variance value of the fifth captured image is calculated based on the above calculation process to obtain the third value, that is, the weighted variance value is calculated once per captured image, and the current is adjusted once, that is, the count of times of capturing, the count of times of adjusting and the count of times of calculation are the same, and the first captured image, the present current and the first value are in one-to-one correspondence. The above processing procedures of adjusting, capturing, compensating, cropping and calculating are repeated to obtain a series of values, the series of values at least include the first value and the second value, and on the basis that the preset count of times is 10, the series of values includes 10 values in total, and then until the cumulative count of times of capturing (the count of times of adjusting the current) reaches the preset count of times, the maximum value is determined in the series of values, and the current corresponding to the maximum value is set as the initial current of the printer, it can be understood that the maximum value indicates that the bright and dark pixel information of the image is the most abundant and there is no data deviation caused by overexposure or underexposure, and the current corresponding to the maximum value is also a suitable current of the capturing apparatus, and then the light uniformity calibration formally starts at the initial current.

S130, acquiring a second captured image.

The second captured image is obtained by capturing, by the capturing apparatus, a second display image displayed on the printing screen under the initial current.

It can be understood that, on the basis of the above S120, after the initial current of the printer is determined, under the initial current, the printing screen refreshes a white image, and the grayscale of the white image is 255, which is recorded as the second display image, and then under the initial current, the capturing apparatus captures the second display image displayed by the printing screen to obtain the second captured image, and transmits the second captured image to the data processing module.

S140, calculating a weighted variance value of the second captured image to obtain a second value, and determining initial light intensity of the printing screen according to the second value.

Optionally, calculating a weighted variance value of the second captured image to obtain a second value may be specifically implemented by using the following steps:
cropping the second captured image based on the camera parameter to obtain a third cropped image consistent with the size of the printed screen; and calculating a weighted variance value of the third cropped image to obtain a second value; calculating a weighted variance value of the third cropped image to obtain the second value.

It may be understood that, based on S130, the second captured image is cropped based on the camera parameter, to obtain a third cropped image consistent with the size of the printed screen, and a weighted variance value of the third cropped image is calculated, to obtain the second value. Then, the second value and the first preset threshold are determined, and if the second value is less than the first preset threshold, the mask image of the third cropped image is calculated to obtain the target mask image, and the target light intensity when the printing screen displays the target mask image is used as the initial light intensity of the printing screen, and the printer current is adjusted to complete the light uniformity adjustment of the printing screen, and then the printing screen can perform 3D printing based on the initial light intensity.

Embodiments of the present disclosure provide a light uniformity adjustment method, which can eliminate the effects of camera distortion, installation errors, ambient light, and the like by camera position calibration and camera light sensitivity calibration. The initial current determined by calculating the weighted variance value and dynamically adjusting the current can reduce the data deviation caused by overexposure or underexposure to some extent. Subsequently, the image captured by the capturing apparatus under the initial current is compensated based on the mask image obtained by the light sensitivity calibration, which can improve the subsequent calculation of the mask image to improve the light uniformity.

On the basis of the above embodiments, FIG. 5 is a detailed flowchart of S140 in the light uniformity method shown in FIG. 1, and optionally, determining the initial light intensity of the printing screen according to the second value specifically includes the following steps S510 to S560 as shown in FIG. 5.

S510, determining a minimum grayscale value of the second captured image, and calculating a mask image of the second captured image based on the minimum grayscale value to obtain a second mask image.

It can be understood that, after the second value is calculated, the maximum grayscale value and the minimum grayscale value of the second captured image are determined, and the mask grayscale value is adjusted pixel by pixel so that the grayscale value of the entire frame of the second captured image is close to the minimum grayscale value to obtain the second mask image composed of the mask grayscale values. Specific implementations can be referred to from the mask generation manner, which will not be repeated herein.

Optionally, determining a minimum grayscale value of the second captured image, and calculating a mask image of the second captured image based on the minimum grayscale value to obtain a second mask image may be specifically implemented by the following steps:
determining a grayscale peak value of the second captured image, and determining a target range based on the grayscale peak value and a second preset threshold; modifying a target grayscale value outside the target range in the second captured image to a preset critical grayscale value to obtain a to-be-processed image; and determining a minimum grayscale value of the to-be-processed image, and calculating a mask image of the to-be-processed image based on the minimum grayscale value to obtain a second mask image.

It can be understood that after cropping of the second captured image is completed to obtain the third cropped image, the grayscale peak value is determined based on the grayscale level image of the third cropped image, and the target range is determined based on the grayscale peak value and the second preset threshold, where the target range refers to the upper and lower boundaries of the grayscale value of the third cropped image, and the second preset threshold can be understood as a specific grayscale value or 1% of a total number of pixels. After the target range is determined, the target grayscale value outside the target range in the grayscale values of the entire frame of the third cropped image is modified to the preset critical grayscale value, and the remaining grayscale values in the target range are retained to obtain the image to be processed, that is, the grayscale value within the target range of the grayscale peak is retained, and the grayscale value outside the adjustment range is the critical grayscale value, for example, the target range is 165-255, and the critical grayscale value is 165, that is, the grayscale value 110 is modified to 165 so that it is within the target range. It may be understood that, for an image with a defect, there may be extremely bright and extremely dark regions after cropping, and the defect may be an abnormality of a captured image caused by factors such as camera lens distortion, ambient stray light, and a defective pixel of a printing screen, so that in this case, a grayscale value higher or lower than a target range may be modified to a critical grayscale value, and this processing manner may eliminate impact of stray light and defective pixels on subsequent calculation, and reduce impact of extremely bright and dark regions on uniform adjustment of light. Then, a mask image of the to-be-processed image is calculated to obtain a second mask image.

S520, determining whether the second value is greater than a first preset threshold, and if yes, obtain a sixth captured image.

The sixth captured image is obtained by the capturing apparatus by capturing the second mask image displayed on the printing screen.

It can be understood that on the basis of the above S510, it is determined whether the second value is greater than the first preset threshold, that is, it is determined whether the weighted variance value of the captured image is within the qualified range, if the second value is greater than the first preset threshold, it indicates that the weighted variance value of the second captured image obtained by the first iteration is not within the qualified range, the second mask image is refreshed to the printing screen, and the capturing apparatus captures the printing screen to obtain the sixth captured image.

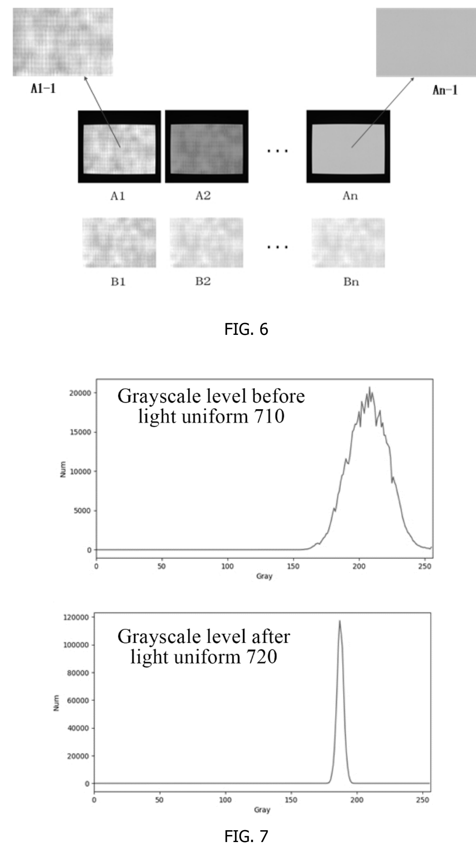

For example, referring to FIG. 6, FIG. 6 is a schematic diagram of a light uniformity process provided by an embodiment of the present disclosure, FIG. 6 includes n captured images, denoted as A1-An, and further includes n mask images, denoted as B1-Bn, A1 is cropped, which may be understood as removing a black edge in A1 to obtain a third cropped image, denoted as A1-1, a size of A1-1 is the same as a size of B1, there is a corresponding relationship between A1 and B1, and so on, there is a corresponding relationship between An and Bn, and An is cropped to obtain a cropped image after light uniform, denoted as An-1. When the second value is greater than the first preset threshold, A1 is the second captured image, B1 is the second mask image obtained based on A1, and A2 is the sixth captured image, the light intensity homogenization process further needs to be continued subsequently, and the foregoing processing procedures of capturing, compensation, cropping, processing, and calculation are repeated.

Optionally, if the second value is less than or equal to the first preset threshold, the method further includes:
measuring target light intensity of the printing screen when displaying the second mask image, and determining the target light intensity as the initial light intensity of the printing screen.

It can be understood that if the second value is less than or equal to the first preset threshold, it indicates that the weighted variance value of the second captured image obtained in the first iteration is within the qualified range, the second mask image is refreshed to the printing screen, the light intensity value on the printing screen at this time is measured by using the optical power meter, which is recorded as the target light intensity, and the target light intensity is used as the initial light intensity of the printing screen. Specifically, a current value of the light plate is adjusted, until the light intensity of the printing screen measured under the adjusted current reaches the target light intensity, and light intensity uniform process of the printing screen is completed. In this case, the second captured image is used as the target captured image, and the second mask image is used as the target mask image to determine the target light intensity. As shown in FIG. 6, the target mask image is Bn, the target captured image is An, where An is the image captured after light uniform.

S530, calculating a weighted variance value of the sixth captured image to obtain a fourth value.

It may be understood that, based on S520, after processing such as compensation, cropping, and modification is performed on the sixth captured image, a weighted variance value of the processed sixth captured image is calculated to obtain the fourth value, and a manner of calculating the weighted variance value is not described in detail.

S540, calculating a mask image of the sixth captured image to obtain a third mask image.

It may be understood that, on the basis of the above S520, the manner of calculating the mask image of the processed sixth captured image to obtain the third mask image, and generating the mask image may refer to the above embodiments, which will not be repeated here, and the processing order of the mask image and the weighted variance value is not limited.

S550, in response to determining the fourth value being less than or equal to the first preset threshold, taking the third mask image as a target mask image.

It may be understood that, based on S530 and S540, if the fourth value is less than or equal to the first preset threshold, it indicates that the weighted variance value of the sixth captured image obtained in the second iteration is within the qualified range, the third mask image is used as the target mask image, and the sixth captured image is used as the target captured image.

Optionally, if the fourth value is greater than the first preset threshold, the method further includes:
superimposing the third mask image and the second mask image to obtain a fourth mask image; obtaining a seventh captured image, where the seventh captured image is obtained by the capturing apparatus by capturing the fourth mask image displayed on the printing screen; calculating a weighted variance value of the seventh captured image to obtain a fifth value; calculating a mask image of the seventh captured image to obtain a fifth mask image; and if the fifth value is less than or equal to the first preset threshold, using the fifth mask image as the target mask image.

It may be understood that if the fourth value is greater than the first preset threshold, it indicates that the weighted variance value of the sixth captured image obtained in the second iteration is not within the qualified range, and a third iteration is further required, and the third mask image obtained in the second iteration and the second mask image obtained in the first iteration are superimposed to obtain a new mask image, which is denoted as a fourth mask image, where the fourth mask image is B2 shown in FIG. 6. Then, the fourth mask image is sent to the printing screen, at this time, the capturing apparatus captures the printing screen to obtain a seventh captured image, repeats the above processing procedures of compensation, cropping and calculation for the captured image to obtain a fifth value, and compares the fifth value with the first preset threshold, if the fifth value is less than the first preset threshold, it indicates that the weighted variance value of the seventh captured image obtained in the third iteration is within the qualified range, and the mask image of the processed seventh captured image is calculated to obtain a fifth mask image, in this case, the seventh captured image is used as the target captured image, and the fifth mask image is used as the target mask image.

It can be understood that if the fifth value is greater than the first preset threshold, it indicates that the weighted variance value of the seventh captured image obtained by the third iteration is not within the qualified range, that is, the fourth iteration needs to be performed, the fifth mask image obtained by the third iteration calculation and the fourth mask image obtained by the second iteration calculation are superimposed to obtain a new mask image, which is denoted as a sixth mask image, and so on, the above processing procedures of shooting, compensation, cutting and calculation are repeated until the weighted variance value of the captured image is within the qualified range, the light uniformity process is ended, or after the number of iterations reaches a specified number of iterations (for example, 10), if the weighted variance value is still not within the qualified range, the light uniformity process is also ended, whether the printing screen has a light projection defect is checked, and the printing screen is adjusted, and if the weighted variance value after multiple adjustments is still unqualified, it can be prompted that the printing screen has reached the maximum service life.

S560, measuring target light intensity of the printing screen when displaying the target mask image, and determining the target light intensity as the initial light intensity of the printing screen.

It can be understood that on the basis of the above S550, the target mask image is obtained, which indicates that within the specified number of iterations, the weighted variance value of the target captured image is within the qualified range, the target mask image calculated according to the target captured image is refreshed to the printing screen, the light intensity value on the printing screen at this time is measured by using the optical power meter, the light intensity value is recorded as the target light intensity, and the target light intensity is used as the initial light intensity of the printing screen. Specifically, a current value of the light plate is adjusted, until the light intensity of the printing screen measured under the adjusted current reaches the target light intensity, and light intensity uniform process of the printing screen is completed. In this case, as shown in FIG. 6, the target captured image is An, the target mask image is Bn, and An is understood as an image captured after light uniform.

For example, referring to FIG. 7, FIG. 7 is a grayscale level diagram before and after light uniform according to an embodiment of the present disclosure, which specifically includes a grayscale level diagram 710 before light uniform and a grayscale level diagram 720 after light uniform, the grayscale level diagram 710 before light uniform is a grayscale level diagram of the second captured image, the grayscale level diagram 720 after light uniform is a grayscale level diagram of the target captured image, and it can be seen from the grayscale level diagram 710 before light uniform that the grayscale value transformation range of the entire frame of the second captured image is relatively large, there are extremely dark and extremely bright regions, and the distribution thereof is non-uniform, and it can be seen from the grayscale level diagram 720 after light uniform that the grayscale values of the entire frame of the target captured image are close to the minimum grayscale value in the grayscale level diagram 710 before light uniform, and the distribution thereof is uniform.

It may be understood that, in a process of obtaining the target mask image through multiple iterations, processing procedures of capturing, compensation, cropping, modification, and two calculations are performed in each iteration. Specific steps of each process can be referred from the above embodiments, which will not be repeated herein.

Embodiments of the present disclosure provide a light uniformity adjustment method, which uses a pixel grayscale weighted variance value as an iterative convergence target for evaluating a light uniformity effect, and can ensure an optimal light uniformity state. By finding the target captured image and the target mask image through multiple iterations, the mask image and the light intensity distribution state can be accurately made one-to-one correspondence, where the target captured image is the optimal state of light uniformity, and this adjustment method is not limited by the structure and environment of the light source, and can quickly and accurately realize the uniformity of the light intensity of the printing screen.

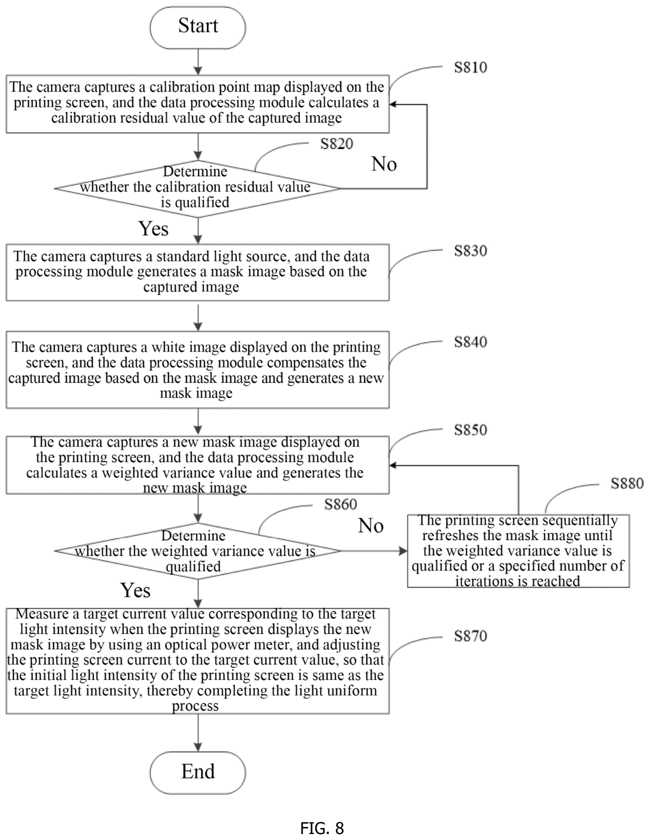

On the basis of the above embodiments, referring to FIG. 8, FIG. 8 is a schematic flowchart of another light uniformity adjustment method according to an embodiment of the present disclosure, which specifically includes following steps S810 to S880 as shown in FIG. 8.

S810, the camera captures a calibration point map displayed on the printing screen, and the data processing module calculates a calibration residual value of the captured image.

S820, determining whether the calibration residual value is qualified.

It may be understood that, based on S810, if yes, S830 is performed, or if no, S810 is performed.

S830, the camera captures a standard light source, and the data processing module generates a mask image based on the captured image.

S840, the camera captures a white image displayed on the printing screen, and the data processing module compensates the captured image based on the mask image and generates a new mask image.

S850, the camera captures a new mask image displayed on the printing screen, and the data processing module calculates a weighted variance value and generates the new mask image.

S860, determining whether the weighted variance value is qualified.

It may be understood that, based on S850, if yes, S870 is performed, or if no, S880 is performed.

S870, measuring a target current value corresponding to the target light intensity when the printing screen displays the new mask image by using an optical power meter, and adjusting the printing screen current to the target current value, so that the initial light intensity of the printing screen is same as the target light intensity, thereby completing the light uniform process.

S880, the printing screen sequentially refreshes the mask image until the weighted variance value is qualified or a specified number of iterations is reached.

It may be understood that if the weighted variance value is unqualified within the specified quantity of iterations, S850 continues to be performed.

It may be understood that for specific implementation steps of S810 to S880, refer to the foregoing embodiments.

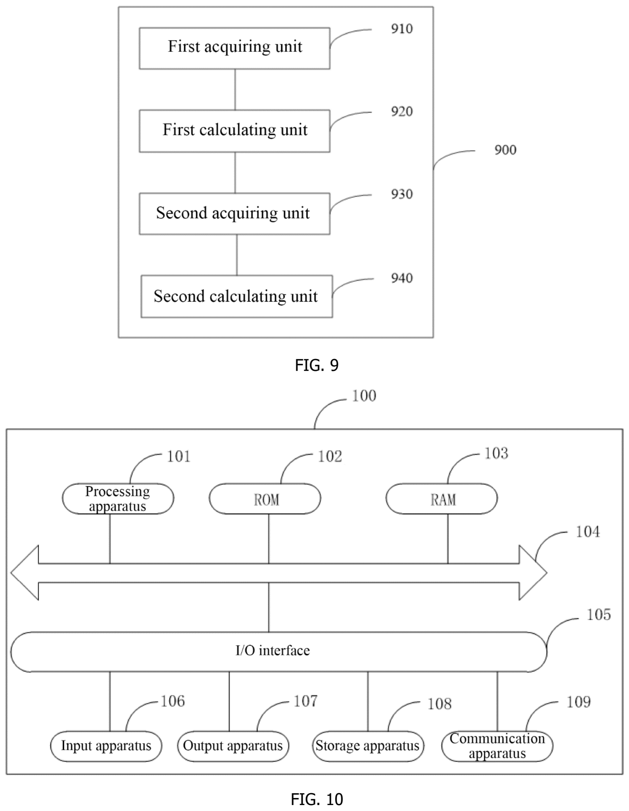

FIG. 9 is a schematic structural diagram of a light uniformity adjustment apparatus according to an embodiment of the present disclosure. The light uniformity adjustment apparatus provided by the embodiments of the present disclosure can perform processes provided by the embodiments of the light uniformity adjustment method, as shown in FIG. 9, the light uniformity adjustment apparatus 900 includes a first acquiring unit 910, a first calculating unit 920, a second acquiring unit 930, and a second calculating unit 940.

The first acquiring unit 910 is configured to acquire a first captured image, where the first captured image is obtained by capturing, by a capturing apparatus, a first display image displayed on a printing screen.

The first calculating unit 920 is configured to calculate a weighted variance value of the first captured image to obtain a first value, and determine an initial current according to the first value.

The second acquiring unit 930 is configured to acquire a second captured image, where the second captured image is obtained by capturing, by the capturing apparatus, a second display image displayed on the printing screen under the initial current; and

The second calculating unit 940 is configured to calculate a weighted variance value of the second captured image to obtain a second value, and determine initial light intensity of the printing screen according to the second value.

Optionally, the apparatus 900 is further configured to perform:
acquiring a third captured image, where the third captured image is obtained by capturing, by the capturing apparatus, a calibration point image displayed on the printing screen;
calculating a camera parameter of the capturing apparatus according to the third captured image;
acquiring a fourth captured image, where the fourth captured image is obtained by capturing, by the capturing apparatus, a standard light source;
cropping the fourth captured image based on the camera parameter to obtain a first cropped image of a target size, where the target size is a size of the printing screen; and
calculating a mask image of the first cropped image to obtain a first mask image, where the first mask image is used for compensating the first captured image.

Optionally, the first calculation unit 920 is configured to perform:
compensating the first captured image by using the first mask image to obtain a compensated first captured image;
cropping the compensated first captured image based on the camera parameter to obtain a second cropped image of the target size; and
calculating a pixel grayscale weighted variance value of the second cropped image to obtain the first value.

Optionally, the first calculating unit 920 is configured to perform:
adjusting a present current according to a preset step size to obtain a target current, where the first captured image is obtained under the present current;
acquiring a fifth captured image obtained by capturing, by the capturing apparatus, the first display image displayed on the printing screen under the target current;
calculating a weighted variance value of the fifth captured image to obtain a third value; and
in response to determining that a cumulative count of times of adjusting a current reaches a preset count of times, determining a maximum value from the first value and the third value, and determining a current corresponding to the maximum value as the initial current.

Optionally, the second calculating unit 940 is configured to perform:
determining a minimum grayscale value of the second captured image, and calculating a mask image of the second captured image based on the minimum grayscale value to obtain a second mask image;
determining whether the second value is greater than a first preset threshold, and in response to determining the second value being greater than the first preset threshold, acquiring a sixth captured image, where the sixth captured image is obtained by capturing, by the capturing apparatus, the second mask image displayed on the printing screen;
calculating a weighted variance value of the sixth captured image to obtain a fourth value;
calculating a mask image of the sixth captured image to obtain a third mask image; and

in response to determining the fourth value being less than or equal to the first preset threshold, taking the third mask image as a target mask image; and
measuring target light intensity of the printing screen when displaying the target mask image, and determining the target light intensity as the initial light intensity of the printing screen.

Optionally, the second calculating unit 940 is configured to:
determining a grayscale peak value of the second captured image, and determining a target range based on the grayscale peak value and a second preset threshold;
modifying a target grayscale value outside the target range in the second captured image to a preset critical grayscale value to obtain a to-be-processed image; and
determining a minimum grayscale value of the to-be-processed image, and calculating a mask image of the to-be-processed image based on the minimum grayscale value to obtain the second mask image.

Optionally, the second calculating unit 940 is configured to perform:
measuring target light intensity of the printing screen when displaying the second mask image, and determining the target light intensity as the initial light intensity of the printing screen.

Optionally, the second calculating unit 940 is configured to perform:
superimposing the third mask image and the second mask image to obtain a fourth mask image;
acquiring a seventh captured image, where the seventh captured image is obtained by capturing, by the capturing apparatus, the fourth mask image displayed on the printing screen;
calculating a weighted variance value of the seventh captured image to obtain a fifth value;
calculating a mask image of the seventh captured image to obtain a fifth mask image; and
in response to determining the fifth value being less than or equal to the first preset threshold, taking the fifth mask image as the target mask image.

The light uniformity adjustment apparatus in the embodiment shown in FIG. 9 may be configured to perform the technical solutions in the foregoing method embodiments, and implementation principles and technical effects thereof are similar, and details are not described herein again.

FIG. 10 is a schematic structural diagram of an electronic device according to an embodiment of the present disclosure. Reference is made to FIG. 10, which show schematic structural diagrams of an electronic device 100 suitable for implementing the embodiments of the present disclosure. The electronic device 100 in the embodiments of the present disclosure may include, but is not limited to, a mobile terminal such as a mobile phone, a notebook computer, a digital broadcast receiver, a PDA (personal digital assistant), a PAD (tablet computer), a PMP (portable multimedia player), a vehicle-mounted terminal (e.g., a vehicle-mounted navigation terminal), a wearable electronic device, and a fixed terminal such as a digital TV, a desktop computer, and a smart home device. The electronic device shown in FIG. 10 is merely an example, and should not impose any limitation on the functions and scope of use of the embodiments of the present disclosure.

As shown in FIG. 10, the electronic device 100 may include a processing device (e.g., a central processing unit, a graphics processing unit, etc.) 101, which may perform various appropriate actions and processes according to a program stored in a read-only memory (ROM)102 or a program loaded from a storage device 108 into a random access memory (RAM)103 to implement the light uniformity adjustment method according to the embodiments of the present disclosure. In RAM 103, various programs and data required for the operation of the electronic device 100 are also stored. The processing apparatus 101, the ROM 102, and the RAM 103 are connected to each other through a bus 104. An input/output (I/O) interface 105 is also connected to the bus 104.

Generally, the following devices may be connected to the I/O interface 105: an input apparatus 106 including, for example, a touch screen, a touch pad, a keyboard, a mouse, a camera, a microphone, an accelerometer, a gyroscope, etc.; an output apparatus 107 including, for example, a liquid crystal display (LCD), a speaker, a vibrator, etc.; a storage apparatus 108 including, for example, a magnetic tape, a hard disk, etc.; and a communication apparatus 109. The communication apparatus 109 may allow the electronic device 100 to perform wireless or wired communication with other devices to exchange data. Although FIG. 10 shows the electronic device 100 having various apparatuses, it should be understood that it is not required to implement or have all the apparatuses shown. More or fewer devices may alternatively be implemented or provided.

In particular, according to embodiments of the present disclosure, the process described above with reference to the flowchart may be implemented as a computer software program. For example, an embodiment of the present disclosure includes a computer program product including a computer program carried on a non-transitory computer-readable medium, the computer program including program code for performing the method shown in the flowchart, thereby implementing the light uniformity adjustment method as described above. In such an embodiment, the computer program may be downloaded and installed from a network through the communication apparatus 109, or installed from the storage apparatus 108, or installed from the ROM 102. When the computer program is executed by the processing apparatus 101, the above functions defined in the method of the embodiments of the present disclosure are performed.

It should be noted that the computer-readable medium described above in the present disclosure may be a computer-readable signal medium or a computer-readable storage medium or any combination thereof. A computer readable storage medium may be, for example, but not limited to, an electronic, magnetic, optical, electromagnetic, infrared, or semiconductor system, apparatus, or device, or any combination of the foregoing. More specific examples of the computer-readable storage medium may include, but are not limited to: an electrical connection having one or more wires, a portable computer disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above. In the present disclosure, the computer-readable storage medium may be any tangible medium containing or storing a program, and the program may be used by or in combination with an instruction execution system, apparatus, or device. In the present disclosure, the computer-readable signal medium may include a data signal propagated in baseband or as part of a carrier wave, in which computer-readable program code is carried. Such a propagated data signal may take many forms, including but not limited to an electromagnetic signal, an optical signal, or any suitable combination thereof. A computer readable signal medium may be any computer readable medium that is not a computer readable storage medium and that can communicate, propagate, or transport a program for use by or in connection with an instruction execution system, apparatus, or device. Program code embodied on a computer readable medium may be transmitted using any appropriate medium, including but not limited to wire, optical fiber cable, RF (radio frequency), etc., or any suitable combination of the foregoing.

In some embodiments, the client and the server may communicate using any currently known or future developed network protocol such as HTTP (HyperText Transfer Protocol), and may be interconnected with any form or medium of digital data communication (e.g., a communication network). Examples of communication networks include a local area network ("LAN"), a wide area network ("WAN"), the Internet (e.g., the Internet), an end-to-end network (e.g., an ad hoc end-to-end network), and any currently known or future developed network.

The computer-readable medium may be included in the electronic device, or may exist alone without being assembled into the electronic device.

Optionally, when the one or more programs are executed by the electronic device, the electronic device may further perform other steps described in the foregoing embodiments.

Computer program code for performing the operations of the present disclosure may be written in one or more programming languages or a combination thereof, including but not limited to object-oriented programming languages such as Java, Smalltalk, C++, and conventional procedural programming languages such as "C" language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The flowcharts and block diagrams in the drawings illustrate the architecture, functionality, and operation of possible implementations of systems, methods and computer program products according to various embodiments of the present disclosure. In this regard, each block in the flowchart or block diagrams may represent a module, segment, or portion of code, which includes one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The units involved in the embodiments of the present disclosure may be implemented by software or hardware. A name of a unit does not constitute a limitation on the unit in some cases.

The functions described above herein may be performed, at least in part, by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of this disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include but not limited to an electronic, magnetic, optical, electromagnetic, infrared, or semiconductor system, apparatus, or device, or any suitable combination of the foregoing. More specific examples of the machine-readable storage medium may include an electrical connection based on one or more wires, a portable computer disk, a hard disk, a random access memory (RAM), a read-only memory (ROM), an erasable programmable read-only memory (EPROM or a flash memory, an optical fiber, a portable compact disk read-only memory (CD-ROM), an optical storage device, a magnetic storage device, or any suitable combination of the above.

It should be noted that, in this document, relational terms such as "first" and "second" are used solely to distinguish one entity or operation from another entity or operation without necessarily requiring or implying any actual such relationship or order between such entities or operations. Moreover, the terms "include", "comprise", or any other variation thereof are intended to cover non-exclusive inclusion, so that a process, method, article, or gateway that includes a series of elements includes not only those elements, but also other elements that are not explicitly listed, or elements inherent to such a process, method, article, or gateway. Without more limitations, an element defined by the statement "including a..." does not exclude the existence of other identical elements in the process, method, article or gateway including the element.

The above are only specific embodiments of the present disclosure, so that those skilled in the art can understand or implement the present disclosure. Various modifications to these embodiments will be readily apparent to those skilled in the art, and the generic principles defined herein may be implemented in other embodiments without departing from the spirit or scope of the disclosure. Therefore, the present disclosure is not limited to these embodiments described herein, but is to be accorded the widest scope consistent with the principles and novel features disclosed herein.

### INDUSTRIAL APPLICABILITY

The light uniformity adjustment method of the present disclosure eliminates the interference of external factors such as aging of the photosensitive CCD of the camera, distortion and dirt of the lens, and external ambient light through calibration of the camera position and the photosensitivity, takes the pixel grayscale weighted variance value of the entire frame image as a convergence condition under the initial current of the printer, and in the case of convergence, adjusts the current of the printing screen based on the light intensity when the printing screen displays the image to determine the initial light intensity, thereby realizing the rapid uniformity of the printing light intensity on the screen, adapting to various light source structures and environmental conditions, and having strong industrial practicability.

## Claims

1. A light uniformity adjustment method, comprising:
acquiring a first captured image, wherein the first captured image is obtained by capturing, by a capturing apparatus, a first display image displayed on a printing screen;
calculating a weighted variance value of the first captured image to obtain a first value, and determining an initial current according to the first value;
acquiring a second captured image, wherein the second captured image is obtained by capturing, by the capturing apparatus, a second display image displayed on the printing screen under the initial current; and
calculating a weighted variance value of the second captured image to obtain a second value, and determining initial light intensity of the printing screen according to the second value.

2. The method according to claim 1, wherein before acquiring the first captured image, the method further comprises:
acquiring a third captured image, wherein the third captured image is obtained by capturing, by the capturing apparatus, a calibration point image displayed on the printing screen;
calculating a camera parameter of the capturing apparatus according to the third captured image;
acquiring a fourth captured image, wherein the fourth captured image is obtained by capturing, by the capturing apparatus, a standard light source;
cropping the fourth captured image based on the camera parameter to obtain a first cropped image of a target size, wherein the target size is a size of the printing screen; and
calculating a mask image of the first cropped image to obtain a first mask image, wherein the first mask image is used for compensating the first captured image.

3. The method according to claim 2, wherein after calculating the camera parameter of the capturing apparatus according to the third captured image, the method further comprises:
determining whether a relative spatial position of the capturing apparatus and the printing screen is properly calibrated according to a calibration residual value and a preset residual value, wherein the calibration residual value is calculated according to the third captured image; and
in response to determining the calibration residual value being less than the preset residual value, generating a determination result that the position is properly calibrated; or in response to determining the calibration residual value being greater than or equal to the preset residual value, generating a determination result that the position is not properly calibrated;
wherein acquiring the fourth captured image comprises:
acquiring the fourth captured image in response to the determination result that the position is properly calibrated.

4. The method according to claim 2, wherein calculating the weighted variance value of the first captured image to obtain the first value comprises:
compensating the first captured image by using the first mask image to obtain a compensated first captured image;
cropping the compensated first captured image based on the camera parameter to obtain a second cropped image of the target size; and
calculating a pixel grayscale weighted variance value of the second cropped image to obtain the first value.

5. The method according to claim 1, wherein determining the initial current according to the first value comprises:
adjusting a present current according to a preset step size to obtain a target current, wherein the first captured image is obtained under the present current;
acquiring a fifth captured image obtained by capturing, by the capturing apparatus, the first display image displayed on the printing screen under the target current;
calculating a weighted variance value of the fifth captured image to obtain a third value; and
in response to determining that a cumulative count of times of adjusting a current reaches a preset count of times, determining a maximum value from the first value and the third value, and determining a current corresponding to the maximum value as the initial current.

6. The method according to claim 1, wherein calculating the weighted variance value of the second captured image to obtain the second value comprises:
cropping the second captured image based on a camera parameter to obtain a third cropped image consistent with a size of the printing screen; and
calculating a weighted variance value of the third cropped image to obtain the second value.

7. The method according to claim 1, wherein determining the initial light intensity of the printing screen according to the second value comprises:
determining a minimum grayscale value of the second captured image, and calculating a mask image of the second captured image based on the minimum grayscale value to obtain a second mask image;
determining whether the second value is greater than a first preset threshold, and in response to determining the second value being greater than the first preset threshold, acquiring a sixth captured image, wherein the sixth captured image is obtained by capturing, by the capturing apparatus, the second mask image displayed on the printing screen;
calculating a weighted variance value of the sixth captured image to obtain a fourth value;
calculating a mask image of the sixth captured image to obtain a third mask image;
in response to determining the fourth value being less than or equal to the first preset threshold, taking the third mask image as a target mask image; and
measuring target light intensity of the printing screen when displaying the target mask image, and determining the target light intensity as the initial light intensity of the printing screen.

8. The method according to claim 7, wherein determining the minimum grayscale value of the second captured image, and calculating the mask image of the second captured image based on the minimum grayscale value to obtain the second mask image comprises:
determining a grayscale peak value of the second captured image, and determining a target range based on the grayscale peak value and a second preset threshold;
modifying a target grayscale value outside the target range in the second captured image to a preset critical grayscale value to obtain a to-be-processed image; and
determining a minimum grayscale value of the to-be-processed image, and calculating a mask image of the to-be-processed image based on the minimum grayscale value to obtain the second mask image.

9. The method according to claim 7, wherein in response to determining the second value being less than or equal to the first preset threshold, the method further comprises:
measuring target light intensity of the printing screen when displaying the second mask image, and determining the target light intensity as the initial light intensity of the printing screen.

10. The method according to claim 7, wherein in response to determining the fourth value being greater than the first preset threshold, the method further comprises:
superimposing the third mask image and the second mask image to obtain a fourth mask image;
acquiring a seventh captured image, wherein the seventh captured image is obtained by capturing, by the capturing apparatus, the fourth mask image displayed on the printing screen;
calculating a weighted variance value of the seventh captured image to obtain a fifth value;
calculating a mask image of the seventh captured image to obtain a fifth mask image; and
in response to determining the fifth value being less than or equal to the first preset threshold, taking the fifth mask image as the target mask image.

11. A light uniformity adjustment apparatus, comprising:
a first acquiring unit, configured to acquire a first captured image, wherein the first captured image is obtained by capturing, by a capturing apparatus, a first display image displayed on a printing screen;
a first calculating unit, configured to calculate a weighted variance value of the first captured image to obtain a first value, and determine an initial current according to the first value;
a second acquiring unit, configured to acquire a second captured image, wherein the second captured image is obtained by capturing, by the capturing apparatus, a second display image displayed on the printing screen under the initial current; and
a second calculating unit, configured to calculate a weighted variance value of the second captured image to obtain a second value, and determine initial light intensity of the printing screen according to the second value.

12. An electronic device, comprising:
a memory;
one or more processors; and
a computer program;
wherein the computer program is stored in the memory and configured to be executed by the one or more processors to implement the light uniformity adjustment method according to any one of claims 1-10.

13. A computer-readable storage medium, storing a computer program, wherein the computer program, when executed by one or more processors, implements the steps of the light uniformity adjustment method according to any one of claims 1-10.
